# EUROPEAN PATENT APPLICATION

(11) **EP 4 729 149 A1**
(43) Date of publication of application: **22.04.2026**
(21) Application number: 24207255.1
(22) Date of filing: 17.10.2024
(51) Int. Cl.: B01D 35/143, B01D 29/23, D06F 39/10

(54) **FILTER ASSEMBLY AND WASHING MACHINE INCLUDING THE SAME**

(30) Priority: 15.10.2024 KR 20240140242
(71) Applicant: Microfilter Co., Ltd., Chungcheongbuk-do 27856 (KR)
(72) Inventor: Joung, Whi Dong, 06544 Seou (KR); Park, Jin Geun, 12553 Gyeonggi-do (KR); Kim, Dong Hyun, 32541 Chungcheongnam-do (KR); Lee, Kyong Su, 18396 Gyeonggi-do (KR); Lee, Hyung Gue, 28791 Chungcheongbuk-do (KR)
(74) Representative: RGTH

(57) **Abstract**

According to an embodiment of the present invention, a filter assembly and a washing machine including the same are provided, wherein the filter assembly comprises: a filter housing having a water inlet part through which washing water flows in, and a discharge part through which the washing water that flows in is filtered and discharged; a filter part disposed inside the housing and provided on one side thereof to filter the washing water that flows in through the water inlet part; and a management part provided on one side of the filter part and displaying a replacement time point of the filter part to be determined according to the inflow of the washing water.

## Description

### Technical field

The present invention relates to a filter assembly and a washing machine including the same.

### Background of the invention

In general, a laundry treatment apparatus is a common name for various devices that treat laundry by applying physical and chemical actions to the laundry, such as a washing machine that removes contaminants from clothes, bedding, and the like (hereinafter, referred to as "laundry") by using water, detergent, and mechanical actions, a dryer that dries wet laundry by using dry hot air heated by a heater, and mechanical actions, a washing machine that also performs both a washing function and a drying function, and a refresher that prevents allergies caused by the laundry by spraying heated steam onto the laundry.

The washing machine may be classified into a top load type washing machine in which a laundry loading hole for loading and unloading laundry is formed at an upper surface of a cabinet and washing is performed by a rotating water current generated when a washing tub rotates, and a drum type washing machine in which a laundry loading hole is formed at a front surface of the cabinet and washing is performed by a drop of laundry when a drum rotates.

A conventional top load type washing machine includes a cabinet which forms an outer appearance and has an opened upper surface, a base which is installed on the lower side of the cabinet, an outer tub which is installed inside the cabinet and stores water, a washing tub which is arranged inside the outer tub and washes laundry, a driving device which is arranged on the lower side of the washing tub and includes a motor rotating the washing tub, a water supply device which supplies water into the outer tub, and a drain device which drains water in the outer tub.

Meanwhile, microplastics are defined as small plastic pieces of less than 5 mm, and there is a problem that microplastics are affecting the environment and health. The amount of microsynthetic microfiber spreads in wastewater and the environment, increasing environmental pollution. In particular, it has been observed that the synthetic microfiber is produced/discharged in the washing process of synthetic fibers that are not biodegradable, resulting in water pollution caused by microplastics.

As described above, various fine dust (fine dust, plastic, laundry dust, fiber dust, yellow dust, heavy metals, radioactive substances, fine dust, other harmful bacteria, etc.) discharged from laundry such as clothing remains and is discharged to the outside as it is, thereby contaminating the environment. There is a concern that it may accumulate in the human body due to environmental pollution, causing diseases.

### Prior art document

### Patent document

(Patent Document 0001) Korean Patent No. 10-2179793

### Detailed Description

### Problems to be solved of the invention

An object of the present invention is to provide a filter assembly capable of easily removing residues such as fine plastic contained in washing drainage generated in a washing process, by providing a filtering device mounted on a drainage portion of a laundry home appliance, and a washing machine including the same.

An object of the present invention is to provide a filter assembly with a buoy to check a replacement cycle of a filter part and a washing machine including the same.

An object of the present invention is to provide a filter assembly capable of preventing a buoy, which can check a replacement cycle of a filter part, from descending by water outflow due to a separation caused by foreign substances, and a washing machine including the same.

The technical problems to be solved by the present invention are not limited to the technical problems mentioned above, and other technical problems that are not mentioned can be clearly understood by those skilled in the art to which the present invention pertains from the following description.

### Means for solving problems

According to an embodiment of the present invention, the filter assembly comprises: a filter housing having a water inlet part through which washing water flows in, and a discharge part through which the washing water that flows in is filtered and discharged; a filter part disposed inside the housing, and provided on one side to filter the washing water that flows in through the water inlet part; and a management part provided on one side of the filter part, and displaying a replacement time point of the filter part to be determined according to the inflow of the washing water.

According to an embodiment of the present invention, the filter part may be provided with a filter cap provided to be coupled to one side of the filter part.

According to an embodiment of the present invention, the management part may include: a buoy provided to float by buoyancy; and a management part housing provided with a buoy accommodating part in which at least a portion of the buoy is accommodated.

According to an embodiment of the present invention, the filter part may include a filtering member configured to filter the washing water; and a filtering frame configured to fix the filtering member.

According to an embodiment of the present invention, the filter housing may include: a body part in which the filter part is accommodated; and a stopper detachably provided on the body part.

According to an embodiment of the present invention, the stopper may include a display part at least partially made of a material having transparency so as to check the buoy.

According to an embodiment of the present invention, the filter housing may include a housing case coupled to the filter housing and provided with a fixing groove to fix the filter assembly at a predetermined position by a fastening means.

According to an embodiment of the present invention, a filter support part may be provided on one or more of one side of the filter part, an inner surface of the filter housing, and the stopper and formed to limit the shaking inside the filter housing within a predetermined range.

A washing machine according to an embodiment of the present invention may include: a washing machine housing forming an exterior of the washing machine; a washing tub disposed inside the washing machine housing and through which washing water supplied from the outside flows in and which is rotatably formed; and a filter assembly disposed for the washing water discharged from the washing tub to be in fluid communication with a discharge pipe, wherein the filter assembly includes: a filter housing having a water inlet part through which the washing water flows in and a discharge part through which the washing water that flows in is filtered and discharged; a filter part disposed inside the filter housing and filtering the washing water that flows in through the water inlet part; and a management part provided on one side of the filter part and displaying a replacement time point of the filter part to be determined according to the inflow of the washing water, and wherein the management part includes: a buoy provided to float by buoyancy; and a management part housing provided with a buoy accommodating part in which at least a portion of the buoy is accommodated.

### Effects of the invention

According to an embodiment of the present invention, the filter assembly and the washing machine including the same wherein a filtering device is mounted on the drainage part according to the present invention easily remove residues such as fine plastic.

It is possible to provide a filter assembly provided with a buoy to check the replacement cycle of the filter part and a washing machine including the same.

A buoy capable of checking the replacement cycle of the filter part can prevent the buoy from descending by water outflow due to a separation caused by foreign substances.

### Brief description of drawings

FIG. 1 is a drawing of a washing machine including a filter assembly according to an embodiment of the present invention,
FIGS. 2 to 3 are perspective views of a filter housing according to an embodiment of the present invention,
FIGS. 4 to 6 are drawings of a filter part according to an embodiment of the present invention,
FIG. 7 is a drawing of a filtering net according to an embodiment of the present invention,
FIG. 8 is a cross-sectional view of a filter assembly according to an embodiment of the present invention,
FIG. 9 is an exploded perspective view of a filter assembly according to an embodiment of the present invention, and
FIGS. 10 to 16 are drawings illustrating a filter cap according to an embodiment of the present invention.

### Specific contents for practicing the invention

Hereinafter, an embodiment of a filter assembly and a washing machine including the same according to the present invention will be described in detail with reference to the accompanying drawings.

It should be noted that, in adding reference numerals to components of each drawing, the same components are denoted by the same reference numerals as possible even though they are illustrated in different drawings. In addition, in describing the embodiment of the present invention, when it is determined that a detailed description of a related known configuration or function interferes with the understanding of the embodiment of the present invention, the detailed description thereof will be omitted.

In describing the components of the embodiments of the present invention, terms such as first, second, A, B, (a), (b), and the like may be used. Such terms are only for distinguishing the constituent elements from other constituent elements, and the essence, order, or sequence of the corresponding constituent elements is not limited by the terms. Unless otherwise defined, all terms used herein, including technical or scientific terms, have the same meaning as commonly understood by those skilled in the art. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The water inlet part and the discharge part described below may refer to a portion, that is, a hole, in which the fluid flowing in the filter assembly is initially introduced and finally discharged.

As described above, in the case of the washing machine, fine plastic or the like discharged from the fiber material when used for a long time may be discharged. Accordingly, the present invention provides a filter to the washing water discharge part to discharge washing water from which the fine plastic or the like included in the washing water is filtered and removed.

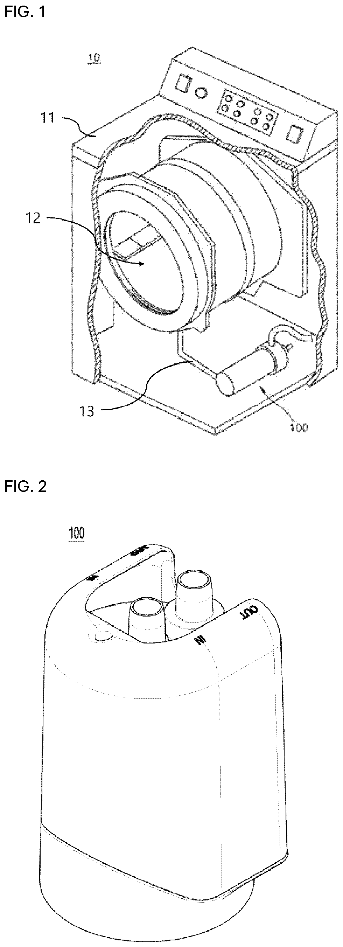

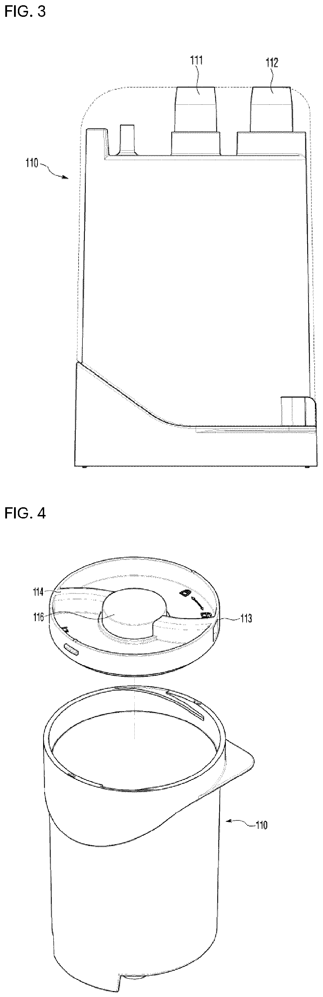

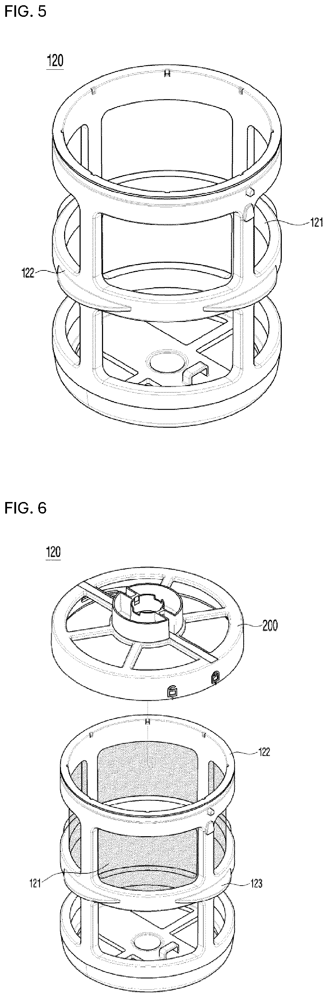

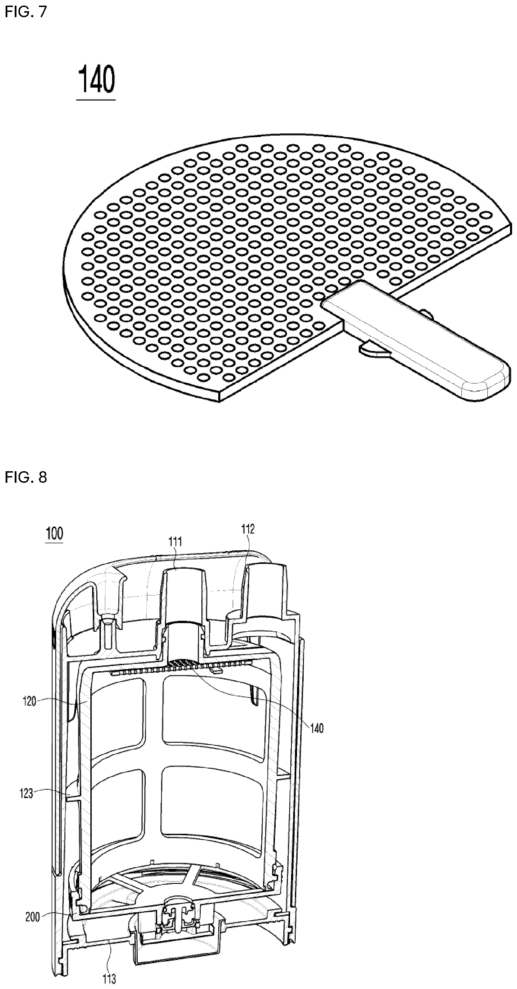

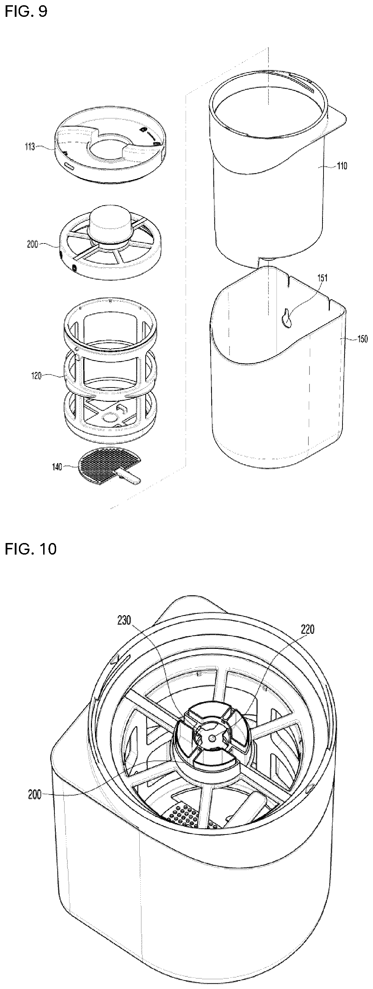

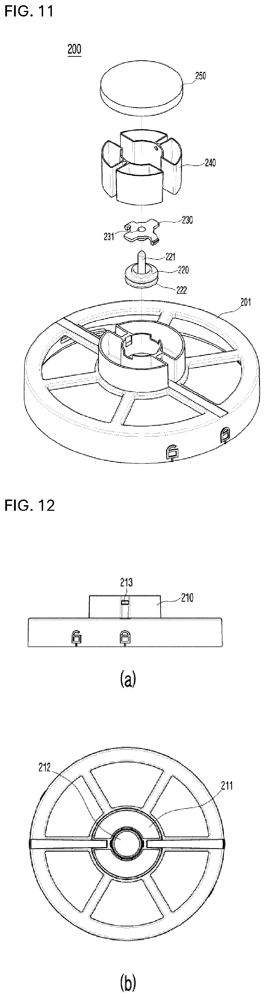

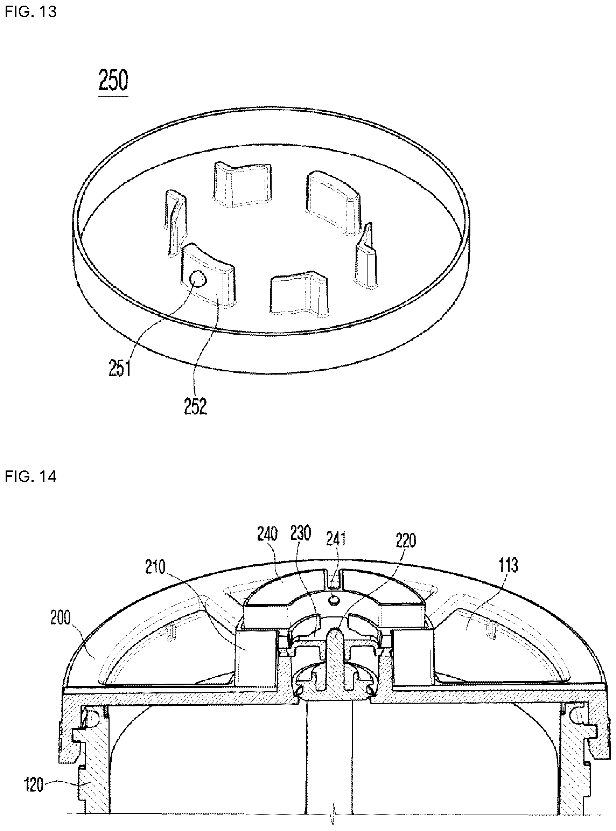

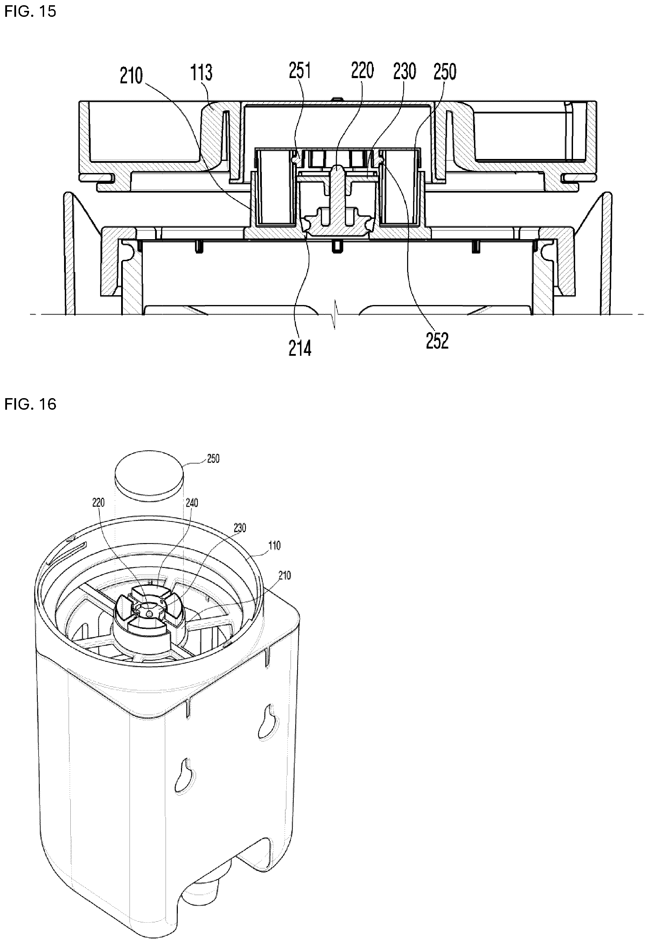

FIG. 1 is a drawing of a washing machine including a filter assembly according to an embodiment of the present invention, FIGS. 2 to 3 are perspective views of a filter housing according to an embodiment of the present invention, FIGS. 4 to 6 are drawings of a filter part according to an embodiment of the present invention, FIG. 7 is a drawing of a filtering net according to an embodiment of the present invention, FIG. 8 is a cross-sectional view of a filter assembly according to an embodiment of the present invention, FIG. 9 is an exploded perspective view of a filter assembly according to an embodiment of the present invention, and FIGS. 10 to 16 are drawings illustrating a filter cap according to an embodiment of the present invention.

Hereinafter, embodiments of the present invention will be described in detail with reference to the accompanying drawings.

The filter assembly 100 according to FIGS. 1 to 15 may include a filter housing 110 having a water inlet part 111 through which washing water flows in and a discharge part112 through which the washing water that flows in is filtered and discharged, and a filter part 120 disposed inside the filter housing 110 and filtering the washing water that flows in through the water inlet part 111.

The filter assembly 100 may be disposed in the washing machine 10, and may filter and discharge foreign substances, fine plastic, and the like after washing water is introduced from the outside. The filter assembly 100 may be formed on a path through which the washing water discharged from the washing tub 12 of the washing machine 01 flows, that is, a path of the discharge pipe 13. The discharge pipe 13 is in fluid communication with the washing tub 12, and the washing water is discharged from the washing tub 12 and passes through the discharge pipe 13 and the filter assembly 100 according to the present invention provided on the discharge pipe 13 to filter and remove fine fibers, fine plastics, and the like, which are generated in the washing of clothes and the like and may be included in the washing water, and the washing water from which the fine fibers, fine plastics, and the like are removed may be discharged to the outside through the filter assembly 100.

The filter assembly 100 includes a filter housing 110 forming an outer shape, and the filter housing 110 may be formed in a cylindrical shape having an inner space formed therein so that washing water is introduced and filtered, but is not limited thereto. The filter housing 110 is provided with a water inlet part 111 through which the washing water may be introduced, and the water inlet part is formed in a hole shape to allow the washing water to be easily introduced. The filter housing 110 may be provided with a discharge part 112 so that the washing water introduced from the water inlet part 111 and filtered is discharged, and may be formed in a hole shape so that the washing water is easily discharged.

The filter housing 110 may be provided with a body part in which the filter part 120 is accommodated and a stopper 113 provided to be detachable from the body part.

The body part may be provided in a cylindrical shape with one open side in which an inner space is formed to accommodate the filter part 120, and the water inlet part 111 and the water discharge part 112 may be provided on the other side.

The filter housing 110 may be provided with a stopper 113. The stopper 113 may be provided to be detachable from the filter housing 110, and the stopper 113 may be provided to facilitate replacement of the filter part 120 and removal of foreign substances, etc. according to detachment of the stopper 113. A grip part 114 may be provided on the bottom surface of the stopper 113 to facilitate gripping, and the user may grip the grip part 114 and rotate or translate the grip part 114 to mount or detach the stopper 113 from the filter housing 110.

A filter net 140 may be provided at one of the water inlet part 111 and the discharge part 112 of the filter housing 110 to prevent inflow of floating matter having a predetermined size or more. Preferably, the filter net 140 may be provided in the water inlet part 111, and the filter net 140 may be provided in the water inlet part 111, thereby preventing floating matter having a predetermined size or more from flowing into the filter assembly 100.

The filter part 120 may be accommodated in the accommodation space of the filter housing 110. The filter part 120 may be provided in a cylindrical shape and disposed to be spaced apart from the inner circumferential surface of the filter housing 110 to have a predetermined interval, and an internal chamber space may be formed to accommodate the washing water introduced through the water inlet part 111 of the filter housing 110. The filter part 120 may filter fine plastic and fine fibers contained in the washing water introduced through the water inlet part 111.

More specifically, the filter part 120 may be configured to include a filtering member 121 for filtering washing water and a filtering frame 122 for fixing the filtering member 121 and forming a frame of the filter part 120. In addition, the filtering frame 122 may be provided with a filtration water inlet part 124, and the filtration water inlet part 124 may be inserted into and communicated with the water inlet part 111 provided in the filter housing 110.

The filtering member 121 may filter foreign substances contained in washing water, fine plastic discharged from fibers, and the like. Preferably, the filtering member 121 may be capable of filtering fine particles having a fine dimension of less than 5 mm. In one example, the filtering member may be provided in the shape of a mesh net or a nonwoven fabric made of a sheet material of fabric. The filtering member is not particularly limited as long as it has a shape or a material in which fine fiber plastic filtered as washing water can be collected. For example, the filtering member may be provided with at least one of a carbon block, a nano-electrostatic sheet, and a UF sheet. The carbon block filter may include activated carbon, a binder, and an additive. The nano-electrostatic sheet may include glass fiber, cellulose, alumina fiber, polypropylene (PP), and polyethylene (PE), and the UF sheet may include polysulfone (PSF), polyethersulfone (PES), polyvinylidene difluoride (PVDF), polypropylene (PP), and polyethylene (PE).

A filter support part 123 may be provided on one or more of one side of the filter part 120 and an inner surface of the filter housing 110. The filter support 123 may be provided to limit the filter 120 from shaking inside the filter housing 110, and preferably, the filter support part 123 may be provided on the filtering frame 122 and may limit shaking within a predetermined range.

The filter part 120 may be formed in a structure in which it is opened on the upper surface thereof, and the filter cap 200 may form the upper surface of the filter part 120 at the opened portion of the filter part 120 and may be detachably provided on the filter part 120. More specifically, the filter cap 200 may be provided to be mounted on an opened portion of the filter part 120 positioned on the side surface on which the stopper 113 of the filter housing 110 is provided, and the filter part 120 may be fixed inside the filter housing 110 by providing the filter cap 200.

A management part may be provided in the filter cap 200 or the filter part 120 to determine a replacement cycle of the filter part 120. More specifically, the management part may be provided in the filter cap 200, and may include a management part housing 210 in which a buoy accommodating part 211 and a bypass accommodating part 212 are provided, a bypass part 220 provided in the bypass accommodating part 212, and buoys 240 and 250 at least partially accommodated in the buoy accommodating part 211, and may determine a replacement cycle of the filter part 120 according to a height at which the buoys 240 and 250 float or whether the buoys float by buoyancy of water flowing into the buoy accommodating part 211.

More specifically, the buoys 240 and 250 may include at least one first buoy 240 at least a portion of which is accommodated in the buoy accommodating part 211 and in which a fastening groove 241 is formed, and at least one second buoy 250 fastened to the first buoy 240. The second buoy 250 may include at least one buoy fixing part 251 protruding in one direction, and a fastening protrusion 252 formed on the buoy fixing part 251 and inserted into the fastening groove 241, and the fastening protrusion 252 may be inserted into the fastening groove 241 so that the first buoy 240 and the second buoy 250 may be fastened. The buoys 240 and 250 may rise due to the buoyancy of the water accommodated in the buoy accommodating part 211, and the replacement cycle of the filter part 120 may be determined according to the rise of the buoys 240 and 250.

A bypass accommodating part 212 for accommodating the bypass part 220 may be provided in the management part housing, and the bypass part 220 may be accommodated in the bypass accommodating part 212 and movably mounted according to the pressure applied to the bypass part 220. The bypass part 220 may be preferably provided as a shaft, but is not limited thereto. The bypass part 220 may be determined in a structure- for example, a weight, a shaft, and a vinyl film provided to be pushed out by a predetermined pressure- provided so that water may flow into the buoy accommodating part 211 through the bypass accommodating part 212 when a pressure that is higher than a predetermined pressure is applied by a person of ordinary skill in the art. When a pressure equal to or greater than a predetermined pressure is generated in the bypass part 220, water may flow into the management part by the pressure, the buoys 240 and 250 may rise due to the buoyancy of the water that flows into the management part, and the replacement cycle of the filter part 120 may be determined according to the rise of the buoys 240 and 250.

In an embodiment of the present invention, the bypass part 220 may be provided as a shaft. A bypass guide 230 fastened to one side of the management part housing 210 to guide the movement of the bypass part 220 by inserting one side of the bypass part 220 may be included. A guide fastening groove 213 to which the bypass guide 220 is fastened may be formed in the management part housing 210, and one side of the bypass guide 230 may be inserted into and fixed to the guide fastening groove 213. A guide hole 231 formed to penetrate may be formed in the bypass guide 230. The bypass part 220 may be provided with a flange part 221 protruding upward, and the flange part 221 may be inserted into a guide hole 231 provided in the bypass guide 230 to guide the movement of the bypass part 220. When a pressure equal to or greater than a predetermined pressure is applied to the bypass part 220, the bypass part 220 may be moved to the inside of the bypass accommodating part 212 by the pressure, and as the bypass part 220 is moved to the inside of the bypass accommodating part 212, water may flow into the buoy accommodating part 211. As water flows into the bypass accommodating part 212, water may flow into the buoy accommodating part 211 so that the buoys 240 and 250 may float.

In addition, the bypass part 220 may be provided with a sealing member insertion part 222 provided to allow a sealing member (not shown) that may be selected from among sealing or watertightness elements such as an O-ring or packing to be inserted therein, and the sealing member insertion part 222 may be provided to allow the sealing member to be provided in the bypass part 220.

The management part housing 210 may be provided with a bypass accommodating part 212 in which the bypass part 220 is accommodated, and the bypass accommodating part 212 may be provided with a locking jaw 214 for preventing separation of the bypass part 220 to prevent separation of the bypass part 220.

The filter assembly 100 may be provided with a housing case 150 coupled to the filter housing 110 and provided with a fixing groove 151 to fix the filter assembly 100 at a predetermined position by a fastening means. The housing case 150 is provided so that the filter assembly 100 may be positioned at a predetermined position by the fastening means.

The filter housing 110 may be provided with a case fastening part 115 to be fastened to one side of the housing case 150, and the housing case 150 may be provided with a housing fastening part 152 to be fastened to the case fastening part 115. The case fastening part 115 may be provided to protrude from one side of the filter housing in one direction, and the housing fastening part 152 may be inserted and fastened to the case fastening part 115 formed to protrude.

As the buoy accommodating part 110 is separately provided, the buoys 240 and 250 may be prevented from descending by the outflow of the water introduced due to the catching of foreign substances or the like, the water may be accumulated in the buoy accommodating part 211 so that the water introduced into the filter assembly 100 may flow in and the buoys 240 and 250 may float, and the replacement cycle of the filter part 120 may be determined according to the floating height of the buoy 240 and 250 or whether the buoys float.

The stopper 113 may be provided with a display 116 provided to check the buoys 240 and 250 provided in the management part. Preferably, the display 116 may be made of a material having transparency to check the buoy, and may check the height at which the buoys 240, 250 float or whether the buoys float, and may determine whether the filter part 120 is replaced according to the height at which the buoys 240, 250 float or whether the buoys float.

FIG. 1 is a drawing of a washing machine including a filter assembly according to an embodiment of the present invention.

A washing machine 10 including a filter assembly 100 according to FIG. 1 may include a washing machine housing 11 forming an outer shape, a washing tub 12 disposed inside the washing machine housing 11 and into which washing water supplied from the outside flows and formed to be rotatable, a discharge pipe 13 in fluid communicating with the washing tub 12 and through which the washing water discharged from the washing tub 12 flows, and a filter assembly 100 disposed on the discharge pipe 13. Since the filter assembly 100 is provided on the discharge pipe 13 through which the washing water is discharged from the washing tub 12, fine fibers and fine plastic contained in the washing water may be filtered and discharged.

In the process of filtering by the filter assembly 100 according to the present invention, washing water is supplied to the washing tub 11 of the washing machine 10. The introduced washing water may be discharged to the outside of the washing machine through a pipe or a hose after washing of clothes or the like is completed. The washing water discharged from the washing tub 12 may be introduced into the filter assembly 100 according to the present invention provided on the discharge pipe 13 along the discharge pipe 13, and fine fibers and fine plastic that may be contained in the washing water may be filtered so that the washing water is discharged to the outside.

The above description of the present invention is for illustration, and those of ordinary skill in the art to which the present invention pertains can understand that the present invention can be easily modified into other specific forms without changing the technical idea or essential features of the present invention. Therefore, it should be understood that the embodiments described above are exemplary and not restrictive in all aspects. For example, each element described as a single element may be distributed and implemented, and similarly, elements described as being distributed may also be implemented in a combined form.

The scope of the present invention is indicated by Claims to be described later, and it should be interpreted that all changes or modified forms derived from the meaning and scope of Claims and the equivalent concept thereof are included in the scope of the present invention.

### Description of Number in Drawing

10: Washing machine
11: Washing machine housing
12: Washing tub
13: Discharge pipe
100: Filter assembly
110: Filter housing
111: Water inlet part
112: Discharge part
113: Stopper
114: Grip part
120: Filter part
121: Filtering member
122: Filtering frame
123: Filter support part
140: Filter net
150: Housing case
151: Fixing groove
200: Filter cap
210: Management part housing
211: Buoy accommodating part
212: Bypass accommodating part
213: Guide fastening groove
220: Bypass part
222: Sealing member insertion part
230: Bypass guide
240: First buoy
241: Fastening groove
250: Second buoy
251: Buoy fixing part
252: Fastening protrusion

## Claims

1. A filter assembly comprising:
a filter housing including a water inlet part through which washing water flows in and a discharge part through which the washing water that flows in is filtered and discharged;
a filter part disposed inside the housing and provided on one side thereof to filter the washing water that flows in through the water inlet part; and
a management part provided on one side of the filter part and configured to display a replacement time point of the filter part according to inflow of the washing water.

2. The filter assembly of claim 1, wherein the filter part is provided with a filter cap provided to be coupled to one side of the filter part.

3. The filter assembly of claim 1, wherein the management part comprises:
a buoy configured to float by buoyancy; and
a management part housing provided with a buoy accommodating part in which at least a portion of the buoy is accommodated.

4. The filter assembly of claim 1, wherein the filter part comprises:
a filtering member configured to filter the washing water; and
a filtering frame configured to fix the filtering member.

5. The filter assembly of claim 1, wherein the filter housing comprises:
a body part in which the filter part is accommodated; and a stopper detachably provided on the body part.

6. The filter assembly of claim 5, wherein the stopper comprises a display part at least partially made of a material having transparency so as to check the buoy.

7. The filter assembly of claim 1, wherein the filter housing comprises a housing case coupled to the filter housing and provided with a fixing groove to fix the filter assembly at a predetermined position by a fastening means.

8. The filter assembly of claim 5, comprising a filter support part provided on at least one of one side of the filter part, an inner surface of the filter housing, and the stopper and formed to limit the shaking within a predetermined range inside the filter housing.

9. A washing machine comprising:
a washing machine housing forming an exterior of the washing machine;
a washing tub disposed inside the washing machine housing and washing water supplied from an outside flowed in and which is rotatably formed; and
a filter assembly disposed so that the washing water discharged from the washing tub is in fluid communication with a discharge pipe,
wherein the filter assembly comprises:
a filter housing having a water inlet part through which the washing water flows in and a discharge part through which the washing water that flows in is filtered and discharged;
a filter part disposed inside the filter housing and filtering the washing water that flows in through the water inlet part; and
a management part provided on one side of the filter part and displaying a replacement time point of the filter part according to the inflow of the washing water, and
wherein the management part comprises: a buoy provided to float by buoyancy; and a management part housing provided with a buoy accommodating part in which at least a portion of the buoy is accommodated.
